# EUROPÄISCHE PATENTSCHRIFT

(11) **EP 3 833 589 B1**
(45) Veröffentlichungstag und Bekanntmachung des Hinweises auf die Patenterteilung: **02.08.2023**
(21) Anmeldenummer: 19755826.5
(22) Anmeldetag: 30.07.2019
(51) Int. Cl.: B60W 50/02, B60W 50/023, B60W 10/18, B60W 10/20, B60R 16/00, B60R 16/03, H02M 1/32, B60W 50/00

(54) **KONTROLLSYSTEM FÜR EIN KRAFTFAHRZEUG UND VERFAHREN ZUR FEHLERDIAGNOSE BEI EINEM KONTROLLSYSTEM**
CONTROL SYSTEM FOR A MOTOR VEHICLE AND METHOD FOR DIAGNOSING A FAILURE IN A CONTROL SYSTEM
SYSTÈME DE CONTRÔLE POUR VÉHICULE AUTOMOBILE ET PROCÉDÉ DE DIAGNOSTIC D'ERREUR DANS UN SYSTÈME DE CONTRÔLE

(30) Priorität: 07.08.2018 DE 102018213182
(43) Veröffentlichungstag der Anmeldung: 16.06.2021
(73) Patentinhaber: HELLA GMBH & CO. KGAA, 59552 Lippstadt (DE)
(72) Erfinder: DECIUS, Nikolaus, 59558 Lippstadt (DE); ECKSTEIN, Julian, 45701 Herten (DE); ORLOV, Sergey, 33104 Paderborn (DE); GRABS, Peter, 97084 Würzburg (DE); KORTE, Matthias, 97084 Würzburg (DE); VOLLMER, Pascal, 76137 Karlsruhe (DE); LERCH, Heiko, 76761 Ruelzheim (DE); CLAUS, Michael, 35043 Marburg (DE); BAUER, Fridolin, 85748 Garching (DE); GEBERT, Jürgen, 85368 Moosburg (DE); OSZWALD, Florian, 80636 München (DE)
(86) Internationale Anmeldenummer: PCT/EP2019/070472
(87) Internationale Veröffentlichungsnummer: WO 2020/048688

(56) Entgegenhaltungen:
- EP-A2- 1 219 489
- WO-A1-2010/034739
- WO-A1-2014/048462
- DE-A1-102014 212 384
- DE-A1-102015 206 531
- DE-A1-102017 206 553

## Beschreibung

Die vorliegende Erfindung bezieht sich auf ein Kontrollsystem für ein Kraftfahrzeug der im Oberbegriff des Anspruchs 1 genannten Art und ein Verfahren zur Fehlerdiagnose bei einem Kontrollsystem der im Oberbegriff des Anspruchs 6 genannten Art.

Derartige Kontrollsysteme für Kraftfahrzeuge, mit einem ersten Steuergerät und einer mit dem ersten Steuergerät signalübertragend verbundenen ersten Leistungselektronik zur Bestromung eines ersten Aktors in einem Normalbetrieb des Kontrollsystems, und Verfahren zur Fehlerdiagnose bei derartigen Kontrollsystemen sind aus dem Stand der Technik in zahlreichen Ausführungsvarianten bereits bekannt.

Beispielsweise ist aus der DE 10 2014 212 384 A1 eine Vorrichtung zum Betreiben eines Fahrzeugs bekannt, wobei die Vorrichtung eine Steuerungseinrichtung, die ausgebildet ist, um das Fahrzeug zu führen, und eine Überwachungseinrichtung, die ausgebildet ist, die Steuerungseinrichtung während der automatisierten Führung des Fahrzeugs mittels der Steuerungseinrichtung auf einen Fehler zu überwachen und bei einem erkannten Fehler die automatisierte Führung des Fahrzeugs von der Steuerungseinrichtung zu übernehmen, aufweist.

Ferner ist aus der WO 2014 048 462 A1 eine Antriebsanordnung für ein Kraftfahrzeug mit einer Energieversorgungseinrichtung zum Bereitstellen einer elektrischen Spannung an deren Anschlussklemmen, einer elektrischen Antriebseinrichtung zum Antreiben zumindest eines Rades des Kraftfahrzeugs, wobei die elektrische Antriebseinrichtung zumindest zwei mehrphasige Wicklungseinrichtungen aufweist, und zumindest einer Wechselrichtereinrichtung für jede der Wicklungseinrichtungen, die zwischen die Energieversorgungseinrichtung und die Wicklungseinrichtungen geschaltet ist, bekannt, wobei die Wechselrichtereinrichtungen jeweils elektrisch parallel zueinander mit den Ausgangsklemmen der Energieversorgungseinrichtung verbunden sind.

Darüber hinaus offenbart die EP 1 219 489 A2 ein System zur Steuerung und/oder Überwachung eines wenigstens zwei Steuergeräte aufweisenden Steuergeräteverbundes, mit einem ersten Steuergerät und wenigstens einem zweiten Steuergerät, wobei das erste Steuergerät mit Mitteln zur Durchführung seiner Steuerfunktion und zur Überwachung der Steuerfunktion, sowie mit Mitteln zur Überwachung der Steuerfunktion des wenigstens einen zweiten Steuergeräts ausgebildet ist.

Hier setzt die vorliegende Erfindung an.

Der vorliegenden Erfindung liegt die Aufgabe zugrunde, eine Alternative anzugeben, um einen ordnungsgemäßen Betrieb eines Kontrollsystems für ein Kraftfahrzeug auch in einem Fehlerfall zu gewährleisten.

Diese Aufgabe wird durch ein Kontrollsystem für ein Kraftfahrzeug mit den Merkmalen des Anspruchs 1 gelöst, wonach das Kontrollsystem eine mit dem Reservesteuergerät signalübertragend verbundene Reserveleistungselektronik zur Bestromung des ersten Aktors in dem ersten Reservebetrieb des Kontrollsystems aufweist, wobei die erste Leistungselektronik mittels mindestens eines ersten Trennschalters je Phase der ersten Leistungselektronik von dem ersten Aktor galvanisch trennbar ist und die Reserveleistungselektronik mittels mindestens eines ersten Zuschalters je Phase der Reserveleistungselektronik mit dem ersten Aktor galvanisch verbindbar ist.

Ferner wird die Aufgabe durch ein Verfahren zur Fehlerdiagnose bei einem Kontrollsystem für ein Kraftfahrzeug mit den Merkmalen des Anspruchs 6 gelöst, wonach das Kontrollsystem nach Anspruch 5 ausgebildet ist und das Verfahren die folgenden Verfahrensschritte aufweist:
- Messung des in der jeweiligen Phase fließenden Stroms mittels des korrespondierenden Messwiderstands, derart, dass die Funktionsfähigkeit jedes einzelnen Schalters ermittelt wird und
- bei einer Fehlfunktion eines der Schalter in der ersten Leistungselektronik der erste Aktor von der ersten Leistungselektronik mittels des mindestens einen ersten Trennschalters oder bei einer Fehlfunktion eines der Schalter in der zweiten Leistungselektronik der zweite Aktor von der zweiten Leistungselektronik mittels des mindestens einen zweiten Trennschalters galvanisch getrennt wird und der zu der fehlerhaften Leistungselektronik korrespondierende Aktor mittels des mindestens einen zu diesem Aktor korrespondierenden Zuschalters galvanisch mit der Reserveleistungselektronik verbunden wird. Die Unteransprüche betreffen vorteilhafte Weiterbildungen der Erfindung.

Ein wesentlicher Vorteil der Erfindung liegt insbesondere darin, dass ein ordnungsgemäßer Betrieb eines Kontrollsystems für ein Kraftfahrzeug auch in einem Fehlerfall gewährleistet ist. In einem Fehlerfall des ersten Steuergeräts oder der ersten Leistungselektronik ist die erste Leistungselektronik mittels des mindestens einen ersten Trennschalters je Phase von dem ersten Aktor galvanisch trennbar und der erste Aktor ist mittels des mindestens einen ersten Zuschalters je Phase mit der Reserveleistungselektronik galvanisch verbindbar, so dass der erste Aktor und damit die mittels des ersten Aktors ausgeführte Funktion des Kraftfahrzeugs mittels des Reservesteuergeräts kontrollierbar ist.

Eine besonders vorteilhafte Weiterbildung des erfindungsgemäßen Kontrollsystems sieht vor, dass das Kontrollsystem ein zweites Steuergerät und eine mit dem zweiten Steuergerät signalübertragend verbundene zweite Leistungselektronik zur Bestromung eines zweiten Aktors in einem Normalbetrieb des Kontrollsystems aufweist und das Reservesteuergerät zur Bestromung des zweiten Aktors in einem zweiten Reservebetrieb des Kontrollsystems mit dem zweiten Steuergerät signalübertragend verbunden ist, wobei in Abhängigkeit des Eingangs eines Fehlersignals des zweiten Steuergeräts in dem Reservesteuergerät das Kontrollsystem von dem Normalbetrieb in den zweiten Reservebetrieb überführbar ist, wobei die zweite Leistungselektronik mittels mindestens eines zweiten Trennschalters je Phase der zweiten Leistungselektronik von dem zweiten Aktor galvanisch trennbar ist und die Reserveleistungselektronik mittels mindestens eines zweiten Zuschalters je Phase der Reserveleistungselektronik mit dem zweiten Aktor galvanisch verbindbar ist. Hierdurch ist es möglich, mit geringem zusätzlichen Aufwand den ordnungsgemäßen Betrieb eines Kontrollsystems für ein Kraftfahrzeug für zwei voneinander verschiedene Aktoren und damit für zwei voneinander verschiedene Funktionen des Kraftfahrzeugs auch in einem Fehlerfall zu gewährleisten.

Für den ordnungsgemäßen Betrieb des erfindungsgemäßen Kontrollsystems ist zusätzlich zu der Funktion des jeweiligen Steuergeräts zur Ansteuerung des dazu korrespondierenden Aktors auch die ordnungsgemäße Funktion der Schalter der dem Steuergerät zugeordneten Leistungselektronik erforderlich. Entsprechend sieht das erfindungsgemäße Verfahren zur Fehlerdiagnose bei einem Kontrollsystem zur Kontrolle eines ersten Aktors oder eines ersten und eines zweiten Aktors eines Kraftfahrzeugs nach Anspruch 5 die folgenden Verfahrensschritte vor:
- Messung des in der jeweiligen Phase fließenden Stroms mittels des korrespondierenden Messwiderstands, derart, dass die Funktionsfähigkeit jedes einzelnen Schalters ermittelt wird und
- bei einer Fehlfunktion eines der Schalter in der ersten Leistungselektronik der erste Aktor von der ersten Leistungselektronik mittels des mindestens einen ersten Trennschalters oder bei einer Fehlfunktion eines der Schalter in der zweiten Leistungselektronik der zweite Aktor von der zweiten Leistungselektronik mittels des mindestens einen zweiten Trennschalters galvanisch getrennt wird und der zu der fehlerhaften Leistungselektronik korrespondierende Aktor mittels des mindestens einen zu diesem Aktor korrespondierenden Zuschalters galvanisch mit der Reserveleistungselektronik verbunden wird.

Auf diese Weise ist gewährleistet, dass bei einer Fehlfunktion eines der Schalter in der ersten Leistungselektronik oder, sofern vorhanden, der zweiten Leistungselektronik der zu der Leistungselektronik mit dem fehlerhaften Schalter korrespondierende Aktor sicher von dieser Leistungselektronik getrennt wird und mit dem Reservesteuergerät und mit der dem Reservesteuergerät zugeordneten Reserveleistungselektronik sicher verbunden wird. Dies ist unbedingt erforderlich, da es sonst zu einer fehlerhaften Ansteuerung des zu der fehlerhaften Leistungselektronik korrespondierenden Aktors mittels der Reserveleistungselektronik kommen kann.

Darüber hinaus ist es für die Funktion des Reservesteuergeräts mit der Reserveleistungselektronik entscheidend, dass die Zuschaltung der Reserveleistungselektronik zu dem von dem Fehler betroffenen Aktor in einem Fehlerfall in der vorgenannten Leistungselektronik ordnungsgemäß funktioniert. Es ist also wichtig, dass der für die Zuschaltung erforderliche mindestens eine zu dem von dem Fehler betroffenen Aktor korrespondierende Zuschalter je Phase ebenfalls ordnungsgemäß funktioniert. Entsprechend sieht eine vorteilhafte Weiterbildung des erfindungsgemäßen Verfahrens vor, dass bei einer Fehlfunktion eines der Schalter in der Reserveleistungselektronik der erste Aktor mittels des mindestens einen ersten Zuschalters oder der erste Aktor und der zweite Aktor mittels des mindestens einen ersten Zuschalters und mittels des mindestens einen zweiten Zuschalters von der Reserveleistungselektronik galvanisch getrennt wird/werden. Hierdurch ist sichergestellt, dass eine Zuschaltung der Reserveleistungselektronik zu dem betroffenen Aktor bei einem fehlerhaften Zuschalter unterbleibt.

Grundsätzlich ist der mindestens eine erste Trennschalter und/oder der mindestens eine zweite Trennschalter und/oder der mindestens eine erste Zuschalter und/oder der mindestens eine zweite Zuschalter nach Art, Funktionsweise, Dimensionierung, Anordnung und Anzahl in weiten geeigneten Grenzen frei wählbar. Eine vorteilhafte Weiterbildung des erfindungsgemäßen Kontrollsystems sieht vor, dass der mindestens eine erste Trennschalter und/oder der mindestens eine zweite Trennschalter und/oder der mindestens eine erste Zuschalter und/oder der mindestens eine zweite Zuschalter als ein Halbleiterschalter ausgebildet sind/ist. Halbleiterschalter sind in einer Vielzahl von Ausführungsformen erhältlich und damit für eine Vielzahl von voneinander verschiedenen Anwendungsfällen einsetzbar. Darüber hinaus sind Halbleiterschalter kostengünstig und platzsparend.

Eine besonders vorteilhafte Weiterbildung der vorgenannten Ausführungsform des erfindungsgemäßen Kontrollsystems sieht vor, dass der mindestens eine erste Trennschalter je Phase der ersten Leistungselektronik und/oder der mindestens eine zweite Trennschalter je Phase der zweiten Leistungselektronik und/oder der mindestens eine erste Zuschalter je Phase der Reserveleistungselektronik und/oder der mindestens eine zweite Zuschalter je Phase der Reserveleistungselektronik als zwei in Reihe geschaltete MOSFET-Schalter ausgebildet sind/ist, wobei die Body-Dioden der jeweils in Reihe geschalteten MOSFET-Schalter eine zueinander entgegengesetzte Sperrrichtung aufweisen. MOSFET-Schalter sind reaktionsschnell und weisen einen lediglich geringen Eigenwiderstand auf. Aufgrund der vorgenannten Verschaltung der in Reihe angeordneten MOSFET-Schalter, nämlich derart, dass die Body-Dioden der jeweils in Reihe geschalteten MOSFET-Schalter eine zueinander entgegengesetzte Sperrrichtung aufweisen, ist eine galvanische Trennung der jeweiligen Phase der zugeordneten Leistungselektronik oder der zugeordneten Reserveleistungselektronik gewährleistet.

Entsprechend sieht eine besonders vorteilhafte Weiterbildung des erfindungsgemäßen Verfahrens vor, dass in jeder Phase der ersten Leistungselektronik und der Reserveleistungselektronik oder in jeder Phase der ersten Leistungselektronik, der zweiten Leistungselektronik und der Reserveleistungselektronik zwei erste Trennschalter und zwei erste Zuschalter oder zwei erste Trennschalter, zwei zweite Trennschalter, zwei erste Zuschalter und zwei zweite Zuschalter jeweils in Reihe geschaltet sind und bei einer Fehlfunktion eines der ersten Trennschalter oder der zweiten Trennschalter oder der ersten Zuschalter oder der zweiten Zuschalter der zu dem fehlerhaften Trennschalter oder Zuschalter korrespondierende Aktor mittels der anderen zu dem fehlerhaften Trennschalter oder Zuschalter korrespondierenden Trennschalter oder Zuschalter von der dem fehlerhaften Trennschalter oder Zuschalter zugeordneten Leistungselektronik oder Reserveleistungselektronik galvanisch getrennt wird.

Eine andere besonders vorteilhafte Weiterbildung des erfindungsgemäßen Kontrollsystems sieht vor, dass die erste Leistungselektronik und die Reserveleistungselektronik oder die erste Leistungselektronik, die zweite Leistungselektronik und die Reserveleistungselektronik je Phase einen Messwiderstand zur Messung des in der jeweiligen Phase fließenden Stroms aufweisen. Auf diese Weise ist eine Fehlerdiagnose der in jeder Phase angeordneten Schalter, also auch der Trennschalter und der Zuschalter, schaltungstechnisch einfach realisierbar. Beispielsweise sind derartige Messwiderstände in den auf dem Markt verfügbaren Leistungselektroniken bereits vorhanden. Zusätzliche Messwiderstände oder Messvorrichtungen, beispielsweise in baulicher und schaltungstechnischer Einheit mit dem jeweiligen einzelnen Schalter, sind nicht erforderlich.

Eine weitere vorteilhafte Weiterbildung des erfindungsgemäßen Verfahrens sieht vor, dass der Strom für die Messung mit dem jeweiligen Messwiderstand einen derart niedrigen Wert aufweist, dass ein Abtrieb des ersten Aktors und/oder ein Abtrieb des zweiten Aktors im Wesentlichen nicht bewegt wird. Hierdurch ist gewährleistet, dass der erste und/oder zweite Aktor und die damit ausgeführte Funktion des Kraftfahrzeugs bei der Durchführung der Messung nicht in ungewünschter Weise betätigt werden.

Eine andere vorteilhafte Weiterbildung des erfindungsgemäßen Verfahrens sieht vor, dass die Messung des in jeder Phase fließenden Stroms in Abhängigkeit eines Betriebszustands und/oder eines Bewegungszustands des Kraftfahrzeugs durchgeführt wird. Beispielsweise ist es denkbar, dass die Messung lediglich bei ausgeschalteter Zündung des Kraftfahrzeugs und/oder lediglich im Stillstand des Kraftfahrzeugs automatisch durchgeführt wird. Auf diese Weise ist sichergestellt, dass die Messung zum einen ohne Störeinflüsse durch den Betrieb des Kraftfahrzeugs und damit durch den Betrieb des ersten und/oder zweiten Aktors erfolgen kann. Zum anderen ist eine ungewünschte Beeinflussung des ersten und/oder zweiten Aktors und damit des Betriebs des Kraftfahrzeugs durch die Messung wirksam verhindert.

Anhand der beigefügten, grob schematischen Zeichnung wird die Erfindung nachfolgend näher erläutert. Dabei zeigt die einzige Figur:

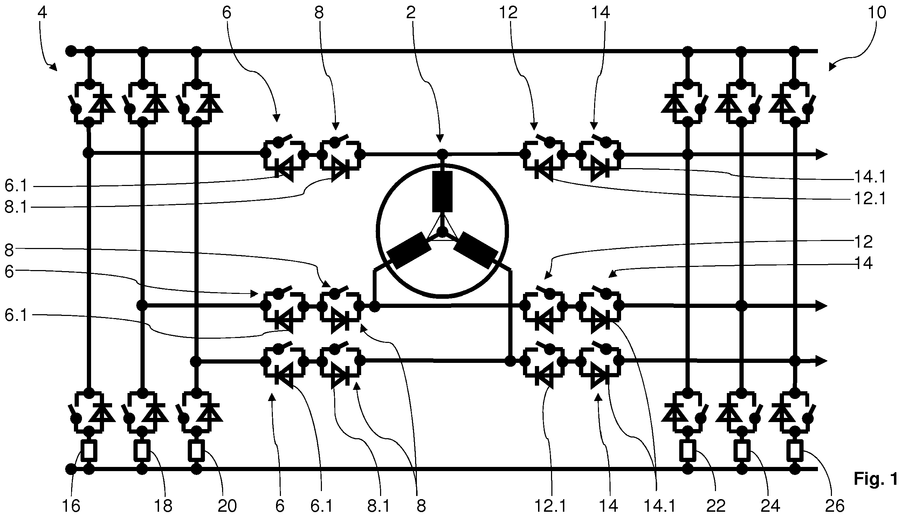

- Fig. 1: ein Ausführungsbeispiel eines erfindungsgemäßen Kontrollsystems für ein Kraftfahrzeug in einer teilweisen Darstellung.

In der Fig. 1 ist ein Ausführungsbeispiel eines erfindungsgemäßen Kontrollsystems für ein Kraftfahrzeug exemplarisch gezeigt. Das Kontrollsystem weist ein erstes Steuergerät für eine erste Funktion und ein zweites Steuergerät für eine zweite Funktion eines nicht näher dargestellten Kraftfahrzeugs auf. Das erste und das zweite Steuergerät sind ebenfalls nicht dargestellt. Das Kraftfahrzeug ist dabei als ein autonomes Kraftfahrzeug ausgebildet, bei dem die Funktionen des Kraftfahrzeugs im Wesentlichen selbsttätig von dem Kraftfahrzeug ausgewählt und ausgeführt werden.

Die erste Funktion ist als Bremsfunktion und die zweite Funktion ist als Lenkfunktion des Kraftfahrzeugs ausgebildet. Entsprechend kontrolliert das erste Steuergerät die Bremsfunktion des Kraftfahrzeugs und das zweite Steuergerät die Lenkfunktion des Kraftfahrzeugs. Das Kontrollsystem weist zur Ausführung der Bremsfunktion einen als Bremse ausgebildeten ersten Aktor 2 und zur Ausführung der Lenkfunktion einen als Lenkung ausgebildeten, nicht dargestellten zweiten Aktor auf. Das erste Steuergerät zur Kontrolle der Bremsfunktion des Kraftfahrzeugs ist in Signalübertragungsverbindung mit einer ersten Leistungselektronik 4 des als Bremse ausgebildeten ersten Aktors 2 des Kraftfahrzeugs und das zweite Steuergerät ist in Signalübertragungsverbindung mit einer zweiten, nicht dargestellten Leistungselektronik des als eine Lenkung ausgebildeten zweiten Aktors des Kraftfahrzeugs. Auch wenn bei dem vorliegenden Ausführungsbeispiel von einem als Bremse ausgebildeten ersten Aktor 2 die Rede ist, ist es selbstverständlich, dass es sich erfindungsgemäß auch um eine Mehrzahl von Bremsen handeln kann.

Damit auch im Fehlerfall eines der Steuergeräte die Bremsfunktion und die Lenkfunktion des Kraftfahrzeugs ordnungsgemäß und damit sicher ausgeführt werden können, weist das Kontrollsystem für das Kraftfahrzeug neben den beiden Steuergeräten zusätzlich ein nicht dargestelltes Reservesteuergerät auf.

Die erste Leistungselektronik 4 ist dabei räumlich getrennt von dem ersten Steuergerät, dem zweiten Steuergerät und dem Reservesteuergerät angeordnet, und bildet mit dem als Bremse ausgebildeten ersten Aktor 2 eine Baueinheit. Entsprechend ist die erste Leistungselektronik 4 in unmittelbarer räumlicher Nähe zu dem ersten Aktor 2 angeordnet. Der erste Aktor 2 und der zweite Aktor sind jeweils als ein Dreiphasenmotor ausgebildet. Die erste Leistungselektronik 4 ist mit dem ersten Aktor 2 mittels zweier erster Trennschalter 6 und 8 je Phase stromleitend verbindbar, wobei die ersten Trennschalter 6, 8 je Phase in Reihe angeordnet sind. Die ersten Trennschalter 6, 8 je Phase sind also in Reihe geschaltet. Die ersten Trennschalter 6 und 8 sind hier jeweils als Halbleiterschalter, nämlich jeweils als MOSFET-Schalter ausgebildet, wobei die Body-Dioden 6.1 und 8.1 der beiden ersten Trennschalter 6, 8 je Phase zueinander eine entgegengesetzte Sperrrichtung aufweisen.

Somit lässt sich die erste Leistungselektronik 4 mittels der ersten Trennschalters 6, 8 bei einem Notfall des ersten Steuergeräts oder der ersten Leistungselektronik sicher, nämlich galvanisch, von dem ersten Aktor 2 trennen. Gleiches gilt für eine mit dem Reservesteuergerät signalübertragend verbindbare oder verbundene erste Reserveleistungselektronik 10. Die Reserveleistungselektronik 10 ist ebenfalls Teil der vorgenannten Baueinheit, so dass diese Baueinheit die Bremse 2, die erste Leistungselektronik 4 und die erste Reserveleistungselektronik 10 umfasst. Demnach ist auch die erste Reserveleistungselektronik 10 räumlich getrennt von dem Reservesteuergerät und in unmittelbarer räumlicher Nähe zu dem ersten Aktor 2, nämlich der Bremse 2, angeordnet. Die erste Reserveleistungselektronik 10 ist mit dem ersten Aktor 2 mittels zweier erster Zuschalter 12 und 14 je Phase stromleitend verbindbar, wobei die ersten Zuschalter 12, 14 je Phase in Reihe angeordnet sind. Die ersten Zuschalter 12, 14 je Phase sind also in Reihe geschaltet. Die ersten Zuschalter 12 und 14 sind hier jeweils als Halbleiterschalter, nämlich jeweils als MOSFET-Schalter ausgebildet, wobei die Body-Dioden 12.1 und 14.1 der beiden ersten Zuschalter 12, 14 je Phase zueinander eine entgegengesetzte Sperrrichtung aufweisen. Somit lässt sich die Reserveleistungselektronik 10 mittels der ersten Zuschalter 12, 14 bei einem der oben genannten Notfälle sicher, nämlich galvanisch, mit dem ersten Aktor 2 verbinden. In einem Notfall des Reservesteuergeräts oder der Reserveleistungselektronik 10 lässt sich der erste Aktor 2 mittels der ersten Zuschalter 12, 14 sicher, nämlich galvanisch, von der Reserveleistungselektronik 10 trennen.

Analoges gilt für die zweite Leistungselektronik. Die zweite Leistungselektronik ist ebenfalls räumlich getrennt von dem ersten Steuergerät, dem zweiten Steuergerät und dem Reservesteuergerät angeordnet und bildet mit dem als Lenkung ausgebildeten zweiten Aktor eine Baueinheit. Entsprechend ist die zweite Leistungselektronik in unmittelbarer räumlicher Nähe zu dem zweiten Aktor angeordnet. Die zweite Leistungselektronik ist mit dem zweiten Aktor mittels zweier zweiter Trennschalter je Phase stromleitend verbindbar. Die zweiten Trennschalter sind ebenfalls nicht dargestellt. Die zweiten Trennschalter je Phase sind in Reihe angeordnet. Die zweiten Trennschalter je Phase sind analog zu den ersten Trennschaltern 6, 8 ausgeführt und relativ zu der Reserveleistungselektronik 10 angeordnet. Die zweiten Trennschalter sind also in Reihe geschaltet und jeweils als Halbleiterschalter, nämlich jeweils als MOSFET-Schalter, ausgebildet. Die Body-Dioden der beiden zweiten Trennschalter je Phase weisen zueinander ebenfalls eine entgegengesetzte Sperrrichtung auf. Die Anordnung der zweiten Leistungselektronik sowie der zweiten Trennschalter ist somit identisch zu der aus Fig. 1 ersichtlichen Anordnung der ersten Leistungselektronik 4 und der ersten Trennschalter 6, 8. Die Reserveleistungselektronik 10 ist, analog zu dem ersten Aktor 2, mittels zweier zweiter Zuschalter je Phase stromleitend mit dem zweiten Aktor verbindbar, wobei die zweiten Zuschalter nicht dargestellt sind und je Phase in Reihe angeordnet sind. Die zweiten Zuschalter je Phase sind also in Reihe geschaltet. Die zweiten Zuschalter sind hier jeweils als Halbleiterschalter, nämlich jeweils als MOSFET-Schalter ausgebildet, wobei die Body-Dioden der beiden zweiten Zuschalter je Phase zueinander eine entgegengesetzte Sperrrichtung aufweisen. Die Reserveleistungselektronik 10 lässt sich mittels der zweiten Zuschalter sicher, nämlich galvanisch, mit dem zweiten Aktor verbinden.

Somit lässt sich die zweite Leistungselektronik mittels der zweiten Trennschalter bei einem Notfall des zweiten Steuergeräts oder der zweiten Leistungselektronik sicher, nämlich galvanisch, von dem zweiten Aktor trennen und der zweite Aktor kann mittels der zweiten Zuschalter sicher, nämlich galvanisch, mit der Reserveleistungselektronik 10 verbunden werden. Analog zu den obigen Ausführungen kann die mit dem Reservesteuergerät signalübertragend verbindbare oder verbundene Reserveleistungselektronik 10 mittels der zweiten Zuschalter bei einem Notfall des Reservesteuergeräts oder der Reserveleistungselektronik sicher, nämlich galvanisch, von dem zweiten Aktor getrennt werden.

In anderen Anwendungsfällen könnte es sich bezüglich der Bremsfunktion und/oder der Lenkfunktion um eine andere Anzahl von Aktoren handeln. Der Fachmann wird je nach Einzelfall die entsprechende Auswahl und Anzahl an Aktoren für die jeweilige Funktion des Kraftfahrzeugs auswählen und festlegen.

Die jeweilige Signalübertragungsverbindung zwischen dem ersten Steuergerät und der ersten Leistungselektronik 4 der Bremse 2 sowie dem zweiten Steuergerät und der zweiten Leistungselektronik der Lenkung ist in der Fig. 1 nicht dargestellt. Das Reservesteuergerät ist zum einen in Signalübertragungsverbindung mit dem ersten und dem zweiten Steuergerät und gleichzeitig in Signalübertragungsverbindung mit der ersten Reserveleistungselektronik 10 der Bremse 2 und der Lenkung.

In jeder Phase der ersten Leistungselektronik 4, der zweiten Leistungselektronik und der Reserveleistungselektronik 10 ist jeweils ein Messwiderstand 16, 18, 20, 22, 24, 26, nämlich ein Nebenschlusswiderstand, zur Messung des in der jeweiligen Phase fließenden Stromes angeordnet. Die Messwiderstände in jeder Phase der zweiten Leistungselektronik sind in Fig. 1 nicht dargestellt.

Im Unterschied zu dem vorliegenden Ausführungsbeispiel ist es jedoch auch möglich, dass anstelle einer gemeinsamen Reserveleistungselektronik für den ersten Aktor und den zweiten Aktor jeweils eine separate Reserveleistungselektronik vorgesehen ist und verwendet wird. Beispielsweise könnte dann die jeweilige Reserveleistungselektronik mit der dazu korrespondierenden Leistungselektronik baulich mit dem jeweiligen Aktor zusammengefasst sein.

Bei der Bremse 2 und der Lenkung des Kraftfahrzeugs handelt es sich um sicherheitsrelevante und damit sehr wichtige Funktionen des Kraftfahrzeugs. Dies gilt im verstärkten Maße für das gewählte Ausführungsbeispiel, bei dem es sich ja um ein autonomes Kraftfahrzeug handelt.

Im Nachfolgenden wird das erfindungsgemäße Verfahren gemäß dem vorliegenden Ausführungsbeispiel und anhand der Fig. 1 näher erläutert.

Im Normalbetrieb des erfindungsgemäßen Kontrollsystems für das autonome Kraftfahrzeug wird die Bremse 2 mittels des ersten Steuergeräts für die Bremsfunktion des Kraftfahrzeugs und die Lenkung mittels des zweiten Steuergeräts für die Lenkfunktion des Kraftfahrzeugs kontrolliert. Die Notwendigkeit eines Bremseingriffes durch das erste Steuergerät oder eines Lenkeingriffes durch das zweite Steuergerät wird in dem ersten Steuergerät oder in dem zweiten Steuergerät oder in einem zu dem jeweiligen Steuergerät übergeordneten Steuergerät auf dem Fachmann bekannte Weise anhand von an dem entsprechenden Steuergerät anliegenden Eingangssignalen von Sensoren des Kraftfahrzeugs entschieden. Sowohl ein etwaiges übergeordnetes Steuergerät wie auch die Sensoren des Kraftfahrzeugs sind in der Fig. 1 nicht dargestellt.

Das Reservesteuergerät greift in dem oben beschriebenen Normalbetrieb des erfindungsgemäßen Kontrollsystems gemäß dem vorliegenden Ausführungsbeispiel nicht in die Bremsfunktion und nicht in die Lenkfunktion des Kraftfahrzeugs ein. Mittels der zwischen dem ersten Steuergerät und dem Reservesteuergerät sowie zwischen diesem und dem zweiten Steuergerät existierenden Signalübertragungsverbindung liegt im Fehlerfall des ersten oder des zweiten Steuergeräts an dem Reservesteuergerät ein entsprechendes Fehlersignal von dem fehlerhaften Steuergerät als Eingangssignal an.

Sollte beispielsweise das erste Steuergerät fehlerhaft arbeiten, so dass die damit kontrollierte Bremse 2 nicht mehr ordnungsgemäß kontrolliert wird und somit die Bremsfunktion des Kraftfahrzeugs nicht mehr sicher ausgeführt wird, so wird dieser Fehler mittels der Signalübertragungsverbindung an das Reservesteuergerät gemeldet, woraufhin das Reservesteuergerät derart konfiguriert wird, dass dieses die Bremsfunktion des Kraftfahrzeugs kontrolliert; also die zu dem fehlerhaften ersten Steuergerät korrespondierende Funktion des Kraftfahrzeugs kontrolliert. Hierzu steht das Reservesteuergerät mittels der Signalübertragungsverbindung mit der Reserveleistungselektronik 10 der Bremse 2 des Kraftfahrzeugs in Signalaustausch. Die Bremse 2 wird somit im Fehlerfall des ersten Steuergeräts nicht mehr von dem ersten Steuergerät, sondern von dem Reservesteuergerät kontrolliert. Gleiches gilt für einen Fehler in der ersten Leistungselektronik 4 der Bremse 2, die im Normalbetrieb von dem ersten Steuergerät angesteuert, also kontrolliert, wird.

Analoges gilt, falls das zweite Steuergerät fehlerhaft arbeitet. In diesem Fall erhält das Reservesteuergerät mittels der Signalübertragungsverbindung eine entsprechende Fehlermeldung bezüglich des zweiten Steuergeräts, woraufhin das Reservesteuergerät derart konfiguriert wird, dass dieses die Lenkfunktion des Kraftfahrzeugs kontrolliert. Die Lenkung wird somit nicht mehr von dem fehlerhaften zweiten Steuergerät, sondern von dem Reservesteuergerät kontrolliert, und zwar mittels der Signalübertragungsverbindung und der Reserveleistungselektronik 10, die ebenfalls der Lenkung zugeordnet ist. Gleiches gilt für einen Fehler in der zweiten Leistungselektronik der Lenkung, die im Normalbetrieb von dem zweiten Steuergerät angesteuert, also kontrolliert, wird.

Wie bereits in der Beschreibungseinleitung ausgeführt ist es für eine ordnungsgemäße Funktion des erfindungsgemäßen Kontrollsystems zur Kontrolle des ersten Aktors 2 und des zweiten Aktors des Kraftfahrzeugs erforderlich, dass die zu dem ersten Aktor 2 und dem zweiten Aktor korrespondierenden Schalter, also auch die ersten Trennschalter 6, 8, die zweiten Trennschalter, die ersten Zuschalter 12, 14 und die zweiten Zuschalter, ordnungsgemäß funktionieren.

Entsprechend sieht das erfindungsgemäße Verfahren gemäß dem vorliegenden Ausführungsbeispiel vor, den in der jeweiligen Phase fließenden Strom mittels des korrespondierenden Messwiderstands 16, 18, 20, 22, 24, 26 derart zu messen, dass die Funktionsfähigkeit jedes einzelnen Schalters ermittelt wird und bei einer Fehlfunktion eines der Schalter in der ersten Leistungselektronik 4 der erste Aktor 2 von der ersten Leistungselektronik 4 mittels der ersten Trennschalter 6, 8 oder bei einer Fehlfunktion eines der Schalter in der zweiten Leistungselektronik der zweite Aktor von der zweiten Leistungselektronik mittels der zweiten Trennschalter galvanisch getrennt wird, und der zu der fehlerhaften Leistungselektronik 4 korrespondierende Aktor 2 mittels der zu diesem Aktor 2 korrespondierenden Zuschalter 12, 14 galvanisch mit der Reserveleistungselektronik 10 verbunden wird.

Analoges gilt für den Fall einer Fehlfunktion eines der Schalter in der Reserveleistungselektronik 10. In diesem Fall wird der erste Aktor 2 mittels der ersten Zuschalter 12, 14 und der zweite Aktor mittels der zweiten Zuschalter von der Reserveleistungselektronik 10 galvanisch getrennt.

Bei einer anderen Ausführungsform, nämlich dass anstelle einer gemeinsamen Reserveleistungselektronik 10 für den ersten Aktor und den zweiten Aktor jeweils eine separate Reserveleistungselektronik vorgesehen ist und verwendet wird, würde entsprechend lediglich der zu der fehlerhaften Reserveleistungselektronik korrespondierende Aktor mittels des diesem Aktor zugeordneten mindestens einen Zuschalters galvanisch getrennt.

Eine Fehlfunktion eines der ersten Trennschalter 6, 8 oder eines der zweiten Trennschalter oder eines der ersten Zuschalter 12, 14 oder eines der zweiten Zuschalter würde ebenfalls mittels der Strommessungen in jeder der Phasen detektiert werden und bei dem Vorliegen einer Fehlfunktion eines der ersten Trennschalter 6, 8 oder der zweiten Trennschalter oder der ersten Zuschalter 12, 14 oder der zweiten Zuschalter wird der zu dem fehlerhaften Trennschalter 6, 8 oder Zuschalter 12, 14 korrespondierende Aktor 2 mittels der anderen zu dem fehlerhaften Trennschalter 6, 8 oder Zuschalter 12, 14 korrespondierenden Trennschalter 6, 8 oder Zuschalter 12, 14 von der dem fehlerhaften Trennschalter 6, 8 oder Zuschalter 12, 14 zugeordneten Leistungselektronik 4 oder Reserveleistungselektronik 10 galvanisch getrennt.

Um zu gewährleisten, dass der erste und/oder zweite Aktor 2 und die damit ausgeführte Funktion des Kraftfahrzeugs, beispielsweise die Bremsfunktion, bei der Durchführung der Messung mittels der Messwiderstände 16, 18, 20, 22, 24, 26 nicht in ungewünschter Weise betätigt werden, wird die Messung mit dem jeweiligen Messwiderstand 16, 18, 20, 22, 24, 26 mit einem derart niedrigen Stromwert durchgeführt, dass ein Abtrieb des ersten Aktors 2 und ein Abtrieb des zweiten Aktors im Wesentlichen nicht bewegt werden.

Ferner wird die Messung des in jeder Phase fließenden Stroms in Abhängigkeit eines Betriebszustands des Kraftfahrzeugs durchgeführt. Die Messungen werden lediglich bei ausgeschalteter Zündung des Kraftfahrzeugs automatisch durchgeführt. Auf diese Weise ist sichergestellt, dass die Messungen zum einen ohne Störeinflüsse durch den Betrieb des Kraftfahrzeugs und damit durch den Betrieb des ersten und/oder zweiten Aktors 2 erfolgen können. Zum anderen ist eine ungewünschte Beeinflussung des ersten und/oder zweiten Aktors 2 und damit des Betriebs des Kraftfahrzeugs durch die Messungen wirksam verhindert.

Eine mittels des erfindungsgemäßen Verfahrens festgestellte Fehlfunktion kann auf dem Fachmann bekannte Weise für einen Benutzer des Kraftfahrzeugs oder Werkstattpersonal wahrnehmbar ausgegeben und/oder in einem Fehlerspeicher für eine spätere Verwendung abgespeichert werden.

Die Erfindung ist nicht auf das vorliegende Ausführungsbeispiel begrenzt. Beispielsweise ist es denkbar, dass das erfindungsgemäße Kontrollsystem für ein Kraftfahrzeug in einem Kraftfahrzeug vorhanden und deaktiviert ist und für eine zukünftige Verwendung mittels eines Bedieneingriffs eines Fahrzeugführers, von Werkstattpersonal oder dergleichen aktivierbar ist. Entsprechend kann es in anderen Ausführungsformen des erfindungsgemäßen Kontrollsystems vorgesehen sein, dass das Kontrollsystem eine Bedienungsschnittstelle aufweist und in Abhängigkeit des Anliegens eines Aktivierungssignals an der Bedienungsschnittstelle von einem Deaktivierungszustand in einen Aktivierungszustand überführbar ist, wobei das Reservesteuergerät in dem Deaktivierungszustand des Kontrollsystems den zu dem fehlerhaften Steuergerät korrespondierenden Aktor des Kraftfahrzeugs unabhängig von dem Eingang eines Fehlersignals nicht kontrolliert und in dem Aktivierungszustand des Kontrollsystems den zu dem fehlerhaften Steuergerät korrespondierenden Aktor des Kraftfahrzeugs in Abhängigkeit von dem Eingang eines Fehlersignals kontrolliert.

Analoges gilt für das erfindungsgemäße Verfahren, wonach in einer anderen Ausführungsform des erfindungsgemäßen Verfahrens das Kontrollsystem eine Bedienungsschnittstelle aufweist und in Abhängigkeit des Anliegens eines Aktivierungssignals an der Bedienungsschnittstelle von einem Deaktivierungszustand in einen Aktivierungszustand überführt wird, wobei das Reservesteuergerät in dem Deaktivierungszustand des Kontrollsystems die zu dem fehlerhaften Steuergerät korrespondierende Funktion des Kraftfahrzeugs unabhängig von dem Eingang eines Fehlersignals nicht kontrolliert und in dem Aktivierungszustand des Kontrollsystems die zu dem fehlerhaften Steuergerät korrespondierende Funktion des Kraftfahrzeugs in Abhängigkeit von dem Eingang eines Fehlersignals kontrolliert.

Beispielsweise kann es möglich sein, dass autonome Kraftfahrzeuge in manchen Staaten rechtlich noch nicht zugelassen sind. Bei einer späteren Änderung der Gesetzeslage kann dann das gemäß der Erfindung vorbereitete Kraftfahrzeug mit geringem Aufwand auf einen autonomen Fahrbetrieb und damit auf die Verwendung eines erfindungsgemäßen Kontrollsystems sowie auf die Verwendung eines erfindungsgemäßen Verfahrens zur Kontrolle des Kraftfahrzeugs in deren Aktivierungszustand umgestellt werden.

Darüber hinaus wäre es möglich, dass das Reservesteuergerät im Unterschied zu dem Ausführungsbeispiel im Normalbetrieb des erfindungsgemäßen Kontrollsystems gleichzeitig als ein drittes Steuergerät zur Kontrolle einer dritten Funktion des Kraftfahrzeugs ausgebildet ist und in Abhängigkeit des Eingangs des Fehlersignals zusätzlich zu der oder anstatt der dritten Funktion des Kraftfahrzeugs die zu dem fehlerhaften ersten oder zweiten Steuergerät korrespondierende erste oder zweite Funktion des Kraftfahrzeugs kontrolliert.

Beispielsweise wäre es denkbar, dass das Reservesteuergerät als drittes Steuergerät im Normalbetrieb des Kraftfahrzeugs eine eher untergeordnete Funktion des Kraftfahrzeugs kontrolliert. Sollte es dann zu einem Fehlerfall des ersten oder des zweiten Steuergeräts kommen, so könnte das Reservesteuergerät derart konfiguriert werden, dass es anstelle der untergeordneten Funktion im Fehlerfall eine relativ dazu übergeordnete Funktion, nämlich einer der durch das erste oder das zweite Steuergerät kontrollierten Funktionen des Kraftfahrzeugs, kontrolliert. Dabei könnte es sich, wie in dem Ausführungsbeispiel, um die Bremsfunktion oder die Lenkfunktion des Kraftfahrzeugs handeln. In anderen Ausgestaltungen der Erfindung, beispielsweise bei gleichrangigen Funktionen des Kraftfahrzeugs, wäre es jedoch auch denkbar, dass das Reservesteuergerät die zu dem fehlerhaften Steuergerät korrespondierende Funktion zusätzlich zu der zu dem Reservesteuergerät in dessen Normalbetrieb korrespondierenden Funktion kontrolliert.

Die jeweilige Signalübertragung kann sowohl direkt oder indirekt, also beispielsweise über ein weiteres Steuergerät, erfolgen. Ferner kann die Signalübertragung drahtgebunden und/oder drahtlos sein.

Die Erfindung ist nicht auf die Bremsfunktion und Lenkfunktion eines Kraftfahrzeugs beschränkt. Auch bei anderen Funktionen eines Kraftfahrzeugs ist die Erfindung vorteilhaft anwendbar.

### Bezugszeichenliste

- 2: Erster Aktor, als Bremse des Kraftfahrzeugs ausgebildet
- 4: Erste Leistungselektronik, korrespondierend zu dem ersten Aktor 2
- 6, 8: Erster Trennschalter
- 6.1, 8.1: Bypass-Diode, korrespondierend zu dem ersten Trennschalter 6, 8
- 10: Reserveleistungselektronik, korrespondierend zu dem ersten Aktor 2 und zu dem zweiten Aktor
- 12, 14: Erster Zuschalter
- 12.1, 14.1: Bypass-Diode, korrespondierend zu dem ersten Zuschalter 12, 14
- 16, 18, 20, 22, 24, 26: Messwiderstand, als Nebenschlusswiderstand ausgebildet

## Patentansprüche

1. Kontrollsystem für ein Kraftfahrzeug, mit einem ersten Steuergerät und einer mit dem ersten Steuergerät signalübertragend verbundenen ersten Leistungselektronik (4) zur Bestromung eines ersten Aktors (2) in einem Normalbetrieb des Kontrollsystems, wobei das Kontrollsystem ein Reservesteuergerät aufweist, und wobei das Reservesteuergerät mit dem ersten Steuergerät signalübertragend verbunden ist und in Abhängigkeit des Eingangs eines Fehlersignals des ersten Steuergeräts in dem Reservesteuergerät das Kontrollsystem von dem Normalbetrieb in einen ersten Reservebetrieb überführbar ist,
**dadurch gekennzeichnet,**
**dass** das Kontrollsystem eine mit dem Reservesteuergerät signalübertragend verbundene Reserveleistungselektronik (10) zur Bestromung des ersten Aktors (2) in dem ersten Reservebetrieb des Kontrollsystems aufweist, wobei die erste Leistungselektronik (4) mittels mindestens eines ersten Trennschalters (6, 8) je Phase der ersten Leistungselektronik (4) von dem ersten Aktor (2) galvanisch trennbar ist und die Reserveleistungselektronik (10) mittels mindestens eines ersten Zuschalters (12, 14) je Phase der Reserveleistungselektronik (10) mit dem ersten Aktor (2) galvanisch verbindbar ist.

2. Kontrollsystem nach Anspruch 1,
**dadurch gekennzeichnet,**
**dass** das Kontrollsystem ein zweites Steuergerät und eine mit dem zweiten Steuergerät signalübertragend verbundene zweite Leistungselektronik zur Bestromung eines zweiten Aktors in einem Normalbetrieb des Kontrollsystems aufweist und das Reservesteuergerät zur Bestromung des zweiten Aktors in einem zweiten Reservebetrieb des Kontrollsystems mit dem zweiten Steuergerät signalübertragend verbunden ist, wobei in Abhängigkeit des Eingangs eines Fehlersignals des zweiten Steuergeräts in dem Reservesteuergerät das Kontrollsystem von dem Normalbetrieb in den zweiten Reservebetrieb überführbar ist, wobei die zweite Leistungselektronik mittels mindestens eines zweiten Trennschalters je Phase der zweiten Leistungselektronik von dem zweiten Aktor galvanisch trennbar ist und die Reserveleistungselektronik (10) mittels mindestens eines zweiten Zuschalters je Phase der Reserveleistungselektronik (10) mit dem zweiten Aktor galvanisch verbindbar ist.

3. Kontrollsystem nach Anspruch 1 oder 2,
**dadurch gekennzeichnet,**
**dass** der mindestens eine erste Trennschalter (6, 8) und/oder der mindestens eine zweite Trennschalter und/oder der mindestens eine erste Zuschalter (12, 14) und/oder der mindestens eine zweite Zuschalter als ein Halbleiterschalter ausgebildet sind/ist.

4. Kontrollsystem nach Anspruch 3,
**dadurch gekennzeichnet,**
**dass** der mindestens eine erste Trennschalter (6, 8) je Phase der ersten Leistungselektronik (4) und/oder der mindestens eine zweite Trennschalter je Phase der zweiten Leistungselektronik und/oder der mindestens eine erste Zuschalter (12, 14) je Phase der Reserveleistungselektronik (10) und/oder der mindestens eine zweite Zuschalter je Phase der Reserveleistungselektronik als zwei in Reihe geschaltete MOSFET-Schalter (6, 8, 12, 14) ausgebildet sind/ist, wobei die Body-Dioden (6.1, 8.1, 12.1, 14.1) der jeweils in Reihe geschalteten MOSFET-Schalter (6, 8, 12, 14) eine zueinander entgegengesetzte Sperrrichtung aufweisen.

5. Kontrollsystem nach einem der Ansprüche 1 bis 4,
**dadurch gekennzeichnet,**
**dass** die erste Leistungselektronik und die Reserveleistungselektronik oder die erste Leistungselektronik (4), die zweite Leistungselektronik und die Reserveleistungselektronik (10) je Phase einen Messwiderstand (16, 18, 20, 22, 24, 26) zur Messung des in der jeweiligen Phase fließenden Stroms aufweisen.

6. Verfahren zur Fehlerdiagnose bei einem Kontrollsystem zur Kontrolle eines ersten Aktors oder eines ersten und eines zweiten Aktors (2) eines Kraftfahrzeugs,
**dadurch gekennzeichnet,**
**dass** das Kontrollsystem nach Anspruch 5 ausgebildet ist und das Verfahren die folgenden Verfahrensschritte aufweist:
- Messung des in der jeweiligen Phase fließenden Stroms mittels des korrespondierenden Messwiderstands (16, 18, 20, 22, 24, 26), derart, dass die Funktionsfähigkeit jedes einzelnen Schalters ermittelt wird und
- bei einer Fehlfunktion eines der Schalter in der ersten Leistungselektronik (4) der erste Aktor (2) von der ersten Leistungselektronik (4) mittels des mindestens einen ersten Trennschalters (6, 8) oder bei einer Fehlfunktion eines der Schalter in der zweiten Leistungselektronik der zweite Aktor von der zweiten Leistungselektronik mittels des mindestens einen zweiten Trennschalters galvanisch getrennt wird und der zu der fehlerhaften Leistungselektronik (4) korrespondierende Aktor (2) mittels des mindestens einen zu diesem Aktor (2) korrespondierenden Zuschalters (12, 14) galvanisch mit der Reserveleistungselektronik (10) verbunden wird.

7. Verfahren nach Anspruch 6,
**dadurch gekennzeichnet,**
**dass** bei einer Fehlfunktion eines der Schalter in der Reserveleistungselektronik (10) der erste Aktor mittels des mindestens einen ersten Zuschalters oder der erste Aktor (2) und der zweite Aktor mittels des mindestens einen ersten Zuschalters (12, 14) und mittels des mindestens einen zweiten Zuschalters von der Reserveleistungselektronik (10) galvanisch getrennt wird/werden.

8. Verfahren nach Anspruch 6 oder 7,
**dadurch gekennzeichnet,**
**dass** in jeder Phase der ersten Leistungselektronik und der Reserveleistungselektronik oder in jeder Phase der ersten Leistungselektronik (4), der zweiten Leistungselektronik und der Reserveleistungselektronik (10) zwei erste Trennschalter und zwei erste Zuschalter oder zwei erste Trennschalter (6, 8), zwei zweite Trennschalter, zwei erste Zuschalter (12, 14) und zwei zweite Zuschalter jeweils in Reihe geschaltet sind und bei einer Fehlfunktion eines der ersten Trennschalter (6, 8) oder der zweiten Trennschalter oder der ersten Zuschalter (12, 14) oder der zweiten Zuschalter der zu dem fehlerhaften Trennschalter (6, 8) oder Zuschalter (12, 14) korrespondierende Aktor (2) mittels der anderen zu dem fehlerhaften Trennschalter (6, 8) oder Zuschalter (12, 14) korrespondierenden Trennschalter (6, 8) oder Zuschalter (12, 14) von der dem fehlerhaften Trennschalter (6, 8) oder Zuschalter (12, 14) zugeordneten Leistungselektronik (4) oder Reserveleistungselektronik (10) galvanisch getrennt wird.

9. Verfahren nach einem der Ansprüche 6 bis 8,
**dadurch gekennzeichnet,**
**dass** der Strom für die Messung mit dem jeweiligen Messwiderstand (16, 18, 20, 22, 24, 26) einen derart niedrigen Wert aufweist, dass ein Abtrieb des ersten Aktors (2) und/oder ein Abtrieb des zweiten Aktors im Wesentlichen nicht bewegt wird.

10. Verfahren nach einem der Ansprüche 6 bis 9,
**dadurch gekennzeichnet,**
**dass** die Messung des in jeder Phase fließenden Stroms in Abhängigkeit eines Betriebszustands und/oder eines Bewegungszustands des Kraftfahrzeugs durchgeführt wird.

## Claims

1. Control system for a motor vehicle with a first control unit connected in a signal transmitting manner to a first power electronics unit (4) for powering a first actuator (2) in a normal operation of the control system, where the control system features a reserve control unit, and where the reserve control unit is connected in a signal transmitting manner to the first control unit and depending on the input of an error signal of the first control unit in the reserve control unit the control system can be switched from normal operation into a first reserve operation,
**characterized in that**
the control system features a reserve power electronics unit (10) connected in a signal transmitting manner to the reserve control unit for powering the first actuator (2) in a first reserve operation of the control system, where the first power electronics unit (4) can be galvanically isolated from the first actuator (2) by means of at least one first isolating switch (6, 8) per phase of the first power electronics unit (4) and the reserve power electronics unit (10) can be galvanically connected to the first actuator (2) by means of at least one first connecting switch (12, 14) per phase of the reserve power electronics unit (10).

2. Control system in accordance with claim 1,
**characterized in that**
the control system features a second control unit and a second power electronics unit connected in a signal transmitting manner to the second control unit for powering a second actuator in a normal operation of the control system and the reserve control unit for powering the second actuator in a second reserve operation of the control system is connected in a signal transmitting manner to the second control unit, where depending on the input of an error signal of the second control unit in the reserve control unit the control system can be switched from normal operation into the second reserve operation, where the second power electronics unit can be galvanically isolated from the second actuator by at least one second isolating switch per phase of the second power electronics unit and the reserve power electronics unit (10) can be galvanically connected to the second actuator by means of at least one second connecting switch per phase of the reserve power electronics unit (10).

3. Control system in accordance with claim 1 or 2,
**characterized in that**
the at least one first isolating switch (6, 8) and/or the at least one second isolating switch and/or the at least one first connecting switch (12, 14) and/or the at least one second connecting switch are/is designed as a semiconductor switch.

4. Control system in accordance with claim 3,
**characterized in that**
the at least one first isolating switch (6. 8) per phase of the first power electronics unit (4) and/or the at least one second isolating switch per phase of the second power electronics unit and/or the at least one connecting switch (12, 14) per phase of the reserve power electronics unit (10) and/or the at least one second connecting switch per phase of the reserve power electronics unit are/is designed as two MOSFET switches (6, 8, 12, 14) connected in series, where the body diodes (6.1, 8.1, 12.1, 14.1) of the MOSFET switches (6, 8, 12, 14) each connected in series feature a blocking direction opposite to each other.

5. Control system in accordance with one of claims 1 through 4,
**characterized in that**
the first power electronics unit and the reserve power electronics unit or the first power electronics unit (4), the second power electronics unit and the reserve power electronics unit (10) feature per phase a measuring resistor (16, 18, 20, 22, 24, 26) for measuring the current flowing in the respective phase.

6. Method for diagnosing a failure in a control system for controlling a first actuator or a first and a second actuator (2) of a motor vehicle,
**characterized in that**
the control system is designed in accordance with claim 5 and the method features the following process steps:
- Measurement of the current flowing in the respective phase by means of the corresponding measuring resistor (16, 18, 20, 22, 24, 26), in such a way that the proper functioning of each individual switch is determined, and
- in the event of a failure of one of the switches in the first power electronics unit (4), the first actuator (2) is galvanically isolated from the first power electronics unit (4) by means of the at least one first isolating switch (6, 8) or in the event of a failure of one of the switches in the second power electronics unit the second actuator is galvanically isolated from the second power electronics unit by means of the at least one second isolating switch and the actuator (2) corresponding to the defective power electronics unit (4) is galvanically connected to the reserve power electronics unit (10) by means of the at least one connecting switch (12, 14) corresponding to this actuator (2).

7. Method in accordance with claim 6,
**characterized in that**
in the event of a malfunction of one of the switches in the reserve power electronics unit (10) the first actuator is galvanically isolated from the reserve power electronics unit (10) by means of the at least one first connecting switch or the first actuator (2) and the second actuator is/are galvanically isolated from the reserve power electronics unit (10) by means of the at least one first connecting switch (12, 14) and by means of the at least one second connecting switch.

8. Method in accordance with claim 6 or 7,
**characterized in that**
in every phase of the first power electronics unit and of the reserve power electronics unit or in every phase of the first power electronics unit (4), of the second power electronics unit and of the reserve power electronics unit (10) two first isolating switches and two first connecting switches or two first isolating switches (6, 8), two second isolating switches, two first connecting switches (12, 14) and two second connecting switches are each connected in series and in the event of a failure of one of the first isolating switches (6, 8) or of the second isolating switches or of the first connecting switches (12, 14) or of the second connecting switches, the actuator (2) corresponding to the defective isolating switch (6, 8) or connecting switch (12, 14) is galvanically isolated from the power electronics unit (4) or the reserve power electronics unit (10) allocated to the defective isolating switch (6, 8) or connecting switch (12, 14) by means of the other isolating switches (6, 8) or connecting switches (12, 14) corresponding to the defective isolating switch (6, 8) or connecting switch (12, 14).

9. Method in accordance with one of claims 6 through 8,
**characterized in that**
the current for the measurement with the respective measuring resistor (16, 18, 20, 22, 24, 26) features such a low value that an output of the first actuator (2) and/or an output of the second actuator is essentially not moved.

10. Method in accordance with one of claims 6 through 9,
**characterized in that**
that the measurement of the current flowing in each phase is performed depending on the operating mode and/or depending on a movement status of the motor vehicle.

## Revendications

1. Système de contrôle pour véhicule automobile comportant un premier boîtier de commande et une première électronique de puissance (4) reliée au premier boîtier de commande de manière pour la transmission de signaux et servant à alimenter en courant un premier actionneur (2) dans un mode de fonctionnement normal du système de contrôle, le système de contrôle comportant un boîtier de commande de réserve et le boîtier de commande de réserve étant relié au premier boîtier de commande pour la transmission de signaux et le système de contrôle pouvant être transféré du mode de fonctionnement normal à un premier mode de réserve en fonction de l'entrée d'un signal d'erreur du premier boîtier de commande dans le boîtier de commande de réserve,
**caractérisé en ce que**
le système de contrôle comporte une électronique de puissance de réserve (10) reliée au boîtier de commande de réserve pour la transmission de signaux pour l'alimentation en courant du premier actionneur (2) dans le premier mode de réserve du système de contrôle, la première électronique de puissance (4) pouvant être isolée galvaniquement du premier actionneur (2) au moyen d'au moins un premier interrupteur de coupure (6, 8) par phase de la première électronique de puissance (4) et l'électronique de puissance de réserve (10) pouvant être reliée galvaniquement au premier actionneur (2) au moyen d'au moins un premier interrupteur de connexion (12, 14) par phase de l'électronique de puissance de réserve (10).

2. Système de contrôle selon la revendication 1,
**caractérisé en ce que**
le système de contrôle comporte un deuxième boîtier de commande et une deuxième électronique de puissance reliée au deuxième boîtier de commande pour la transmission de signaux pour l'alimentation en courant d'un deuxième actionneur dans un mode de fonctionnement normal du système de contrôle et que le boîtier de commande de réserve est relié au deuxième boîtier de commande pour la transmission de signaux pour l'alimentation en courant du deuxième actionneur dans un deuxième mode de réserve du système de contrôle, le système de contrôle pouvant être transféré du mode fonctionnement normal au deuxième mode de réserve en fonction de l'entrée d'un signal d'erreur du deuxième boîtier de commande dans le boîtier de commande de réserve, la deuxième électronique de puissance pouvant être séparée galvaniquement du deuxième actionneur au moyen d'au moins un deuxième interrupteur de coupure par phase de la deuxième électronique de puissance et l'électronique de puissance de réserve (10) pouvant être reliée galvaniquement au deuxième actionneur au moyen d'au moins un deuxième interrupteur de connexion par phase de l'électronique de puissance de réserve (10).

3. Système de contrôle selon la revendication 1 ou 2,
**caractérisé en ce que**
au moins le premier sectionneur (6, 8) et/ou au moins le deuxième interrupteur de coupure et/ou au moins le premier interrupteur de connexion (12, 14) et/ou au moins le deuxième interrupteur de connexion sont conçus comme un commutateur à semi-conducteurs.

4. Système de contrôle selon la revendication 3,
**caractérisé en ce que**
au moins le premier interrupteur de coupure (6, 8) par phase de la première électronique de puissance (4) et/ou au moins le deuxième interrupteur de coupure par phase de la deuxième électronique de puissance et/ou au moins le premier interrupteur de connexion (12, 14) par phase de l'électronique de puissance de réserve (10) et/ou au moins le deuxième interrupteur de connexion par phase de l'électronique de puissance de réserve sont conçus comme deux commutateurs MOSFET (6, 8, 12, 14) montés en série, les diodes « body » (6.1, 8.1, 12.1, 14.1) des commutateurs MOSFET (6, 8, 12, 14) respectivement montés en série présentent une direction de blocage opposée l'une à l'autre.

5. Système de contrôle selon l'une des revendications 1 à 4,
**caractérisé en ce que**
la première électronique de puissance et l'électronique de puissance de réserve ou la première électronique de puissance (4), la deuxième électronique de puissance et l'électronique de puissance de réserve (10) présentent pour chaque phase une résistance de mesure (16, 18, 20, 22, 24, 26) pour mesurer le courant circulant dans la phase respective.

6. Procédé de diagnostic d'erreur dans un système de contrôle destiné à contrôler un premier actionneur ou un premier et un deuxième actionneur (2) d'un véhicule automobile,
**caractérisé en ce que**
le système de contrôle est réalisé selon la revendication 5 et le procédé présente les étapes de procédé suivantes :
- mesure du courant circulant dans la phase correspondante au moyen de la résistance de mesure correspondante (16, 18, 20, 22, 24, 26), de telle sorte que la fonctionnalité de chaque interrupteur individuel est déterminée et
- en cas de dysfonctionnement de l'un des interrupteurs dans la première électronique de puissance (4), le premier actionneur (2) de la première électronique de puissance (4) est déconnecté galvaniquement au moyen au moins du premier interrupteur de coupure (6, 8) ou, en cas de dysfonctionnement de l'un des interrupteurs dans la deuxième électronique de puissance, le deuxième actionneur de la deuxième électronique de puissance est déconnecté galvaniquement au moyen au moins du deuxième interrupteur de coupure et l'actionneur (2) correspondant de l'électronique de puissance (4) défectueuse est connecté galvaniquement à l'électronique de puissance de réserve (10) au moyen d'au moins un interrupteur de connexion (12, 14) correspondant à cet actionneur (2).

7. Procédé selon la revendication 6,
**caractérisé en ce que**
en cas de dysfonctionnement de l'un des interrupteurs dans l'électronique de puissance de réserve (10), le premier actionneur est déconnecté galvaniquement de l'électronique de puissance de réserve (10) au moyen au moins du premier interrupteur de connexion ou le premier actionneur (2) et le deuxième actionneur au moyen au moins du premier interrupteur de connexion de connexion (12, 14) et au moins du deuxième interrupteur de connexion.

8. Procédé selon la revendication 6 ou 7,
**caractérisé en ce que**
dans chaque phase de la première électronique de puissance et de l'électronique de puissance de réserve ou dans chaque phase de la première électronique de puissance (4) ou de la deuxième électronique de puissance et de l'électronique de puissance de réserve (10), deux premiers interrupteurs de coupure et deux premiers interrupteurs de connexion ou deux premiers interrupteurs de coupure (6, 8), deux deuxièmes interrupteurs de coupure, deux premiers interrupteurs de connexion (12, 14) et deux deuxièmes interrupteurs de connexion sont respectivement montés en série et, en cas de dysfonctionnement de l'un des premiers interrupteurs de coupure (6, 8) ou des deuxièmes interrupteurs de coupure ou des premiers interrupteurs de connexion (12, 14) ou des deuxièmes interrupteurs de connexion, l'actionneur (2) correspondant à l'interrupteur de coupure (6, 8) ou à l'interrupteur de connexion (12, 14) défectueux est activé au moyen des autres interrupteurs de coupure (6, 8) ou interrupteurs de connexion (12, 14) est déconnecté galvaniquement de l'électronique de puissance (4) ou de l'électronique de puissance de réserve (10) associée à l'interrupteur de coupure (6, 8) ou à l'interrupteur de connexion (12, 14) défectueux.

9. Procédé selon l'une des revendications 6 à 8,
**caractérisé en ce que**
le courant pour la mesure avec la résistance de mesure respective (16, 18, 20, 22, 24, 26) présente une valeur si faible qu'une sortie du premier actionneur (2) et/ou une sortie du deuxième actionneur n'est sensiblement pas déplacée.

10. Procédé selon l'une des revendications 6 à 9,
**caractérisé en ce que**
la mesure du courant circulant dans chaque phase est effectuée en fonction d'un état de fonctionnement et/ou d'un état de mouvement du véhicule automobile.
